(19) Europäisches Patentamt
European Patent Office
Office européen des brevets

(11) EP 4 775 414 A1

## (12) EUROPEAN PATENT APPLICATION

(43) Date of publication:
**15.07.2026 Bulletin 2026/29**

(21) Application number: **25151493.1**

(22) Date of filing: **13.01.2025**

(51) International Patent Classification (IPC):
**B60D 1/01** $^{(2006.01)}$  **B60D 1/24** $^{(2006.01)}$
**B60D 1/62** $^{(2006.01)}$  **B62D 53/08** $^{(2006.01)}$
**B62D 59/04** $^{(2006.01)}$

(52) Cooperative Patent Classification (CPC):
**B60D 1/62; B60D 1/248; B62D 53/08; B62D 59/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **CHOUDHARY, Mukesh**
**413 26 Göteborg (SE)**

• **ERDINC, Umur**
**413 26 Göteborg (SE)**
• **OSCARSSON, Christian**
**444 47 Stenungsund (SE)**
• **JACOBSON, Bengt**
**435 38 Mölnlycke (SE)**
• **HERMANSSON, Harald**
**412 58 Göteborg (SE)**
• **TJÄRNLUND LEPPÄMÄKI, Joakim**
**517 36 Bollebygd (SE)**

(74) Representative: **Zacco Sweden AB**
**P.O. Box 5581**
**Löjtnantsgatan 21**
**114 85 Stockholm (SE)**

## (54) METHOD OF CONTROLLING OPERATION OF A SEMITRAILER

(57) A method of controlling operation of a semitrailer (10) coupled to a tractor (12) via a fifth wheel coupling (16a-b), the method comprising: obtaining (S 1) a relation between a coupling force (Fcx) in a yaw plane and a vertical coupling force (Fcz) in the semitrailer's part (16a) of the fifth wheel coupling; receiving (S2), from at least one axle load sensor (24a-c) included in the semitrailer (10), at least one axle load (Fz21, Fz22, Fz23) of the semitrailer; determining (S3), by processing circuitry (30), a propulsion force (Fx21) to propel the semitrailer with using at least one electrical machine (20) arranged to drive at least one axle (18a) of the semitrailer, wherein the propulsion force is determined based on the obtained relation and the received at least one axle load; determining (S4), by the processing circuitry, a torque based on the determined propulsion force; and providing control parameters (32) based on the determined torque to the at least one electrical machine.

FIG. 1

EP 4 775 414 A1

**Description**

**TECHNICAL FIELD**

The disclosure relates generally to vehicle motion management. In particular aspects, the disclosure relates to a method of controlling operation of a semitrailer. The disclosure can be applied to heavy-duty vehicles, such as trucks, among other vehicle types. Although the disclosure may be described with respect to a particular vehicle, the disclosure is not restricted to any particular vehicle.

**BACKGROUND**

A semitrailer (or semi-trailer) is a trailer without a front axle. The semitrailer may be coupled to a tractor via a fifth wheel coupling, wherein the tractor conventionally pulls the semitrailer.

It has been contemplated equipping semitrailers with an electric motor on one of the axles of the semitrailer, resulting in an electric and/or partly self-propelled semitrailer. However, communication between the semitrailer and the tractor in the context of torque control may only allow the tractor to send a brake pressure request to the trailer.

**SUMMARY**

According to a first aspect of the disclosure, there is provided a method of controlling operation of a semitrailer coupled to a tractor via a fifth wheel coupling, the method comprising: obtaining a relation between a coupling force in a yaw plane and a vertical coupling force in the semitrailer's part of the fifth wheel coupling; receiving, from at least one axle load sensor included in the semitrailer, at least one axle load of the semitrailer; determining, by processing circuitry, a propulsion force to propel the semitrailer with using at least one electrical machine arranged to drive at least one axle of the semitrailer, wherein the propulsion force is determined based on the obtained relation and the received at least one axle load; determining, by the processing circuitry, a torque based on the determined propulsion force; and providing control parameters based on the determined torque to the at least one electrical machine. The first aspect of the disclosure may seek to estimate or determine how much force the driven axle on the semitrailer should propel with, in particular without an extra method of communication between the tractor and the semitrailer. A technical benefit may include that both the tractor and the semitrailer can propel with a torque distribution being proportional to the axle load on the tractor and semitrailer respectively, which in turn provides for improved stability of the tractor and semitrailer combination. Moreover, the torque on the semitrailer may be controlled without an extra method of communication between the tractor and the semitrailer.

Optionally in some examples, including in at least one preferred example, determining the propulsion force may generally include multiplying the obtained relation by the received at least one axle load.

Optionally in some examples, including in at least one preferred example, said relation may be obtained based on measurements by a coupling force sensor included in the semitrailer. A technical benefit may include that these measurements readily and at all times may be available to an electronic control unit for the at least one electrical machine of the semitrailer. Alternatively, the coupling forces could be estimated rather than measured, i.e. without having a coupling force sensor included in the semitrailer.

Optionally in some examples, including in at least one preferred example, the at least one axle load used to determine the propulsion force may be a total axle load of the semitrailer. The total axle load of the semitrailer may include the axle load of the at least one axle driven by the at least one electrical machine as well as the axle load of any axle (of the semitrailer) not driven by any electrical machine.

Optionally in some examples, including in at least one preferred example, the semitrailer may comprise at least one axle not driven by any electrical machine, wherein the at least one axle load used to determine the propulsion force is the axle load of the at least one axle driven by the at least one electrical machine. This will lower the propulsion force, and it will be saturated by the friction limit of the at least one axle (driven by the at least one electrical machine) instead of the unit (semitrailer).

Optionally in some examples, including in at least one preferred example, the coupling force in a yaw plane may be a longitudinal coupling force. By using the coupling force sensor to measure the vertical and longitudinal coupling forces, the proportion between longitudinal and vertical force can be used to determine the optimal amount of force to propel the semitrailer with, while still operating safely.

Optionally in some examples, including in at least one preferred example, the propulsion force may at least partly be determined by:

$$\frac{Fcx}{Fcz}Fz_2 = Fx_{21}$$

where $Fcx$ is the longitudinal coupling force, $Fcz$ is the vertical coupling force, $Fz_2$ is the total axle load of the semitrailer, and $Fx_{21}$ is the propulsion force. This will allow the combination (tractor+semitrailer) to have the same unit-wise friction utilization without knowing the current propulsion force on the other unit.

Optionally in some examples, including in at least one preferred example, the torque used to provide the control parameters may be limited to zero in response to an articulation angle between the semitrailer and the tractor being above 90 degrees. This may avoid that the semitrailer starts to reverse at high articulation angles (>90 degrees) between the tractor and the semitrailer

Optionally in some examples, including in at least one preferred example, the coupling force in a yaw plane may be a total coupling force in the yaw plane determined by:

$$Fctot = \sqrt{Fcx^2 + Fcy^2}$$

where $Fctot$ is the total coupling force in the yaw plane, $Fcx$ is a longitudinal coupling force, and $Fcy$ is a lateral coupling force. This can be used to remove an enforced linear decrease of force due to articulation angle.

Optionally in some examples, including in at least one preferred example, the propulsion force further may be determined based on a factor capable of reducing the torque depending on (at least) one of: articulation angle between the semitrailer and the tractor, side slip angle of the semitrailer, road friction, longitudinal velocity of the semitrailer, lateral acceleration of the semitrailer, and curvature of the road that the semitrailer is travelling on. In case the factor depends on articulation angle, the torque can be decreased when increasing the articulation angle, which results in a safer vehicle combination (tractor+semitrailer) in turns. Moreover, the semitrailer propulsion force/torque may be reduced or lowered for: higher side slip angle of the semitrailer, lower road friction, higher longitudinal velocity of the semitrailer, higher lateral acceleration of the semitrailer, and/or higher curvature of the road that the semitrailer is travelling on.

Optionally in some examples, including in at least one preferred example, the factor may range from 1 to 0. This allows full torque utilization (1) down to no torque utilization (0) at all.

Optionally in some examples, including in at least one preferred example, the propulsion force may be determined by:

$$\frac{Fctot}{Fcz} Fz_2 \cdot \beta = Fx_{21}$$

where $Fctot$ is the total coupling force in the yaw plane, $Fez$ is the vertical coupling force, $Fz_2$ is the total axle load of the semitrailer, $\beta$ is the factor capable of reducing the torque, and $Fx_{21}$ is the propulsion force.

Optionally in some examples, including in at least one preferred example, the factor may depend on articulation angle between the semitrailer and the tractor, wherein the factor is 1 up to a predetermined articulation angle, and wherein the factor decreases to 0 beyond the predetermined articulation angle. This allows full torque utilization up to the predetermined articulation angle (for example 15 degrees), then the factor may scale down rapidly to avoid failures, such as jackknifing.

Optionally in some examples, including in at least one preferred example, the propulsion force used to determine the torque may be limited by $\mu Fz_{21}$, where $\mu$

is the friction coefficient between the road and the tires of at least one axle that the at least one electrical machine is arranged to drive, and $Fz_{21}$ is the axle load of the at least one axle that the at least one electrical machine is arranged to drive. In this way, slipping may be avoided.

Optionally in some examples, including in at least one preferred example, the torque may be determined by:

$$Fx_{21} \cdot r_{21} = T_{21}$$

where $Fx_{21}$ is the propulsion force, $r_{21}$ is the radius of the wheels of the at least one axle driven by the at least one electrical machine, and $T_{21}$ is the torque. The (determined) torque may hence be a wheel torque.

Optionally in some examples, including in at least one preferred example, the method may further comprise: driving, by the at least one electrical machine, the at least one axle with the determined torque.

According to a second aspect of the disclosure, there is provided a computer program product comprising program code for performing, when executed by processing circuitry, the method of the first aspect of the disclosure.

According to a third aspect of the disclosure, there is provided a non-transitory computer-readable storage medium comprising instructions, which when executed by processing circuitry, cause the processing circuitry to perform the method of the first aspect of the disclosure.

According to a fourth aspect of the disclosure, there is provided a computer system configured to perform the method of the first aspect of the disclosure. The computer system may for example be an electronic control unit (ECU) for the at least one electrical machine of the semitrailer.

According to a fifth aspect of the disclosure, there is provided a semitrailer comprising the computer system according to the fourth aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

**BRIEF DESCRIPTION OF THE DRAWINGS**

Examples are described in more detail below with reference to the appended drawings.

FIG. 1 is a schematic side view of an exemplary tractor and semitrailer combination according to an example.

FIG. 2 is a block diagram of part of the semitrailer in FIG. 1.

FIG. 3 is a flow chart of an exemplary method of controlling operation of a semitrailer according to an example.

FIG. 4 illustrates a factor depending on articulation angle between the semitrailer and tractor.

FIG. 5 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The disclosure may seek to estimate or determine how much force the driven axle on the semitrailer should propel with, in particular without an extra method of communication between the tractor and the semitrailer. According to a first aspect of the disclosure, a method of controlling operation of a semitrailer being coupled to a tractor via a fifth wheel coupling comprises: obtaining a relation between a coupling force in a yaw plane and a vertical coupling force in the semitrailer's part of the fifth wheel coupling; receiving, from at least one axle load sensor included in the semitrailer, at least one axle load of the semitrailer; determining, by processing circuitry, a propulsion force to propel the semitrailer with using at least one electrical machine arranged to drive at least one axle of the semitrailer, wherein the propulsion force is determined based on the obtained relation and the received at least one axle load; determining, by the processing circuitry, a torque based on the determined propulsion force; and providing control parameters based on the determined torque to the at least one electrical machine. A technical benefit may include that both the tractor and the semitrailer can propel with a torque distribution being proportional to the axle load on the tractor and semitrailer respectively, which in turn provides for improved stability of the tractor and semitrailer combination. Moreover, the torque on the semitrailer may be controlled without an extra method of communication between the tractor and the semitrailer.

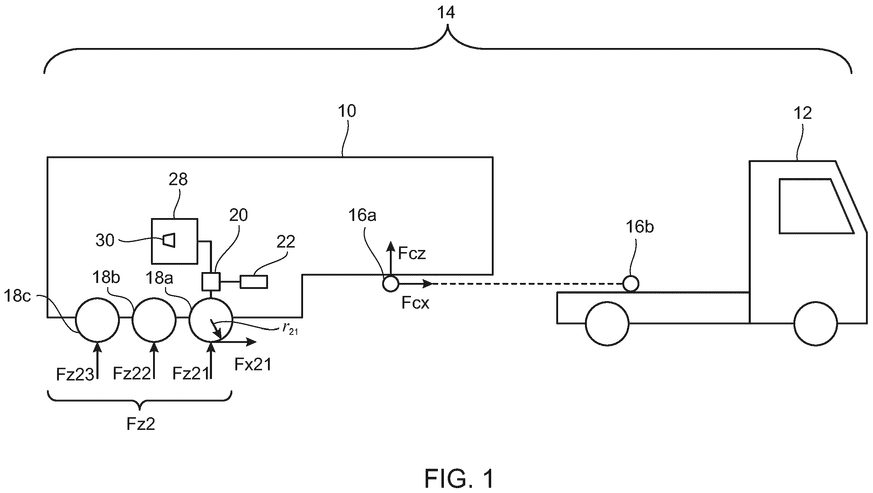

FIG. 1 illustrates a semitrailer 10 according to an example. The semitrailer 10 may generally be configured for the transport of goods, materials, one or more vehicles, or the like. As such, the semitrailer 10 does not have a front axle.

The semitrailer 10 may be coupled to a tractor 12. The tractor 12 may generally be adapted to haul or pull the semitrailer 10. The tractor 12 may be an electric tractor, or it may be powered by an internal combustion engine, for example. The tractor 12 may also be referred to as a tractor truck or tractor unit. The semitrailer 10 coupled to the tractor 12 may collectively be referred to as a (vehicle) combination 14.

The semitrailer 10 may be coupled to the tractor 12 via a fifth wheel coupling 16a-b. The semitrailer's part 16a of the fifth wheel coupling is typically a kingpin protruding from the bottom of the front of the semitrailer 10. The tractor's part 16b of the fifth wheel coupling is typically a horseshoe-shaped coupling device ("fifth wheel"). The tractor's part 16b of the fifth wheel coupling may be provided on the rear of the tractor 12 itself, as in FIG. 1. Alternatively, the tractor's part 16b of the fifth wheel coupling could be provided on a dolly (not shown) pulled by the tractor 12.

The semitrailer 10 comprises at least one rear axle, for example a single axle or two axles or three axles 18a-c. Each (rear) axle 18a-c of the semitrailer 10 is provided with wheels.

The semitrailer 10 further comprises at least one electrical machine 20 arranged to drive at least one axle 18a of the semitrailer 10. As such, the semitrailer 10 may be referred to as an electric semitrailer 10 and/or a (partly) self-propelled semitrailer 10. The at least one electrical machine 20 may for example be at least one electric motor. The at least one electrical machine 20 may be powered by at least one battery 22 onboard the semitrailer 10. The at least one electrical machine 20 may for example be a single electrical machine/motor 20 arranged to drive one of the axles 18a-c of the semitrailer 10, such as the foremost axle 18a (as in FIG. 1), whereas the remaining axles 18b-c are not arranged to be driven by any electrical machine. Alternatively, the semitrailer 10 could have several electrical machines each arranged to drive a respective axle of the semitrailer 10, or two electrical machines arranged to drive one axle of the semitrailer 10, for example.

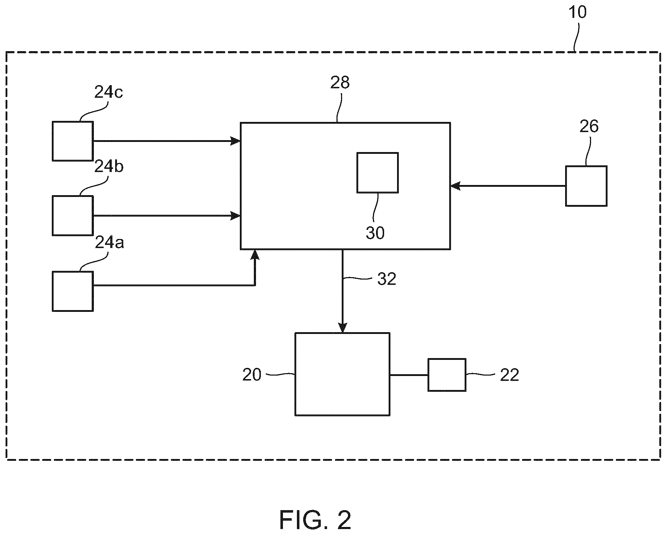

With further reference to FIG. 2, the semitrailer 10 further comprises at least one axle load sensor 24a-c. The semitrailer 10 may for example comprises one axle load sensor 24a-c per axle 18a-c of the semitrailer 10. The axle load sensors 24a-c may be adapted to measure the axle load $Fz21$, $Fz22$, $Fz23$ on each axle 18a-c of the semitrailer 10. That is, axle load sensor 24a may be adapted to measure the axle load $Fz21$ on axle 18a, and so on.

The semitrailer 10 may further comprise a coupling force sensor 26. The coupling force sensor 26 may generally be adapted to measure forces in the semitrailer's part 16a of the fifth wheel coupling. Specifically, the coupling force sensor 26 may be adapted to measure a vertical coupling force $Fcz$, a longitudinal coupling force $Fcx$, and optionally a lateral coupling force $Fcy$ in the semitrailer's part 16a of the fifth wheel coupling. The vertical coupling force $Fcz$ may here be defined as perpendicular to the yaw plane of the semitrailer 10. The lateral coupling force $Fcy$ may be defined as extending in the yaw plane and being perpendicular to the longitudinal coupling force $Fcx$/longitudinal direction of the semitrailer 10.

The semitrailer 10 may further comprise an electronic control unit (ECU) 28 or other computer system. The electronic control unit 28 may comprise processing circuitry 30. The electronic control unit 28 may generally be configured to control the electrical machine(s) 20. The electronic control unit 28 may for example be configured to control the torque of the electrical machine(s) 20, as a torque controller. The electronic control unit 28 may be connected to the electrical machine(s) 20, the axle load sensors 24a-c, and the coupling force sensor 26, as indicated in **FIG. 2.**

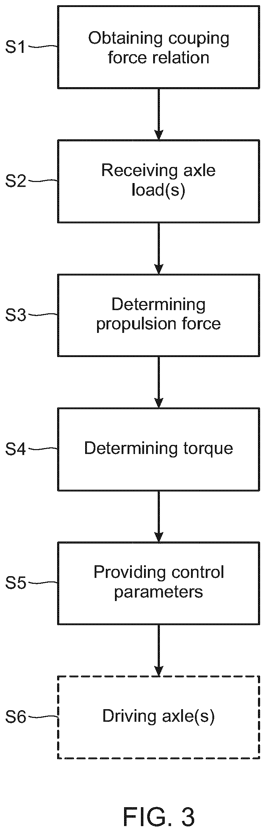

Turning to **FIG. 3, FIG. 3** is a flow chart of an exemplary method of controlling operation of the semitrailer 10 (when) coupled to the tractor 12 via the fifth wheel coupling 16a-b. The method may at least partly be performed by the electronic control unit 28. The method may (at least partly) be computer-implemented.

The method comprises obtaining S1 a relation between a coupling force in a yaw plane and a vertical coupling force Fcz in the semitrailer's part 16a of the fifth wheel coupling. In a first example, the coupling force in the yaw plane may be a longitudinal coupling force Fcx. In a second example, the coupling force in a yaw plane may be a total coupling force in the yaw plane, as will be described in more detail hereinbelow. The yaw plane may for example be a horizontal plane when the semitrailer 10 is on level ground.

The (coupling force) relation may be obtained based on measurements by the coupling force sensor 26. In the first example, to obtain the relation, the electronic control unit 28 may receive the longitudinal coupling force Fcx and the vertical coupling force Fcz (both in Newtons) from the coupling force sensor 26, and determine (by the processing circuitry 30) the relation by dividing the longitudinal coupling force Fcx by the vertical coupling force Fcz.

The method further comprises receiving S2, from the at least one axle load sensor 24a-c, at least one axle load Fz21, Fz22, Fz23 (in Newtons) for at least one of the axles 18a-c of the semitrailer 10. The electronic control unit 28 may for example receive the axle load Fz21, Fz22, Fz23 for all the axles 18a-c from the axle load sensors 24a-c, whereby a total axle load Fz2 of the semitrailer 10 may be determined (e.g. by the processing circuitry 30) as the sum of the axle loads Fz21, Fz22, and Fz23. That is, Fz2 = Fz21 + Fz22 + Fz23. Alternatively, the electronic control unit 28 could receive the axle load for only one of the axles 18a-c (such as axle 18a), whereby the total axle load Fz2 of the semitrailer 10 may be determined or estimated (e.g. by the processing circuitry 30) by multiplying that axle load by the number of axles of the semitrailer 10. That is, Fz2 = 3 x Fz21.

The method further comprises determining S3, by the processing circuitry 30, a propulsion force Fx21 to propel the semitrailer 10 with using the at least one electrical machine arranged to drive at least one axle of the semitrailer 10 (such as electrical machine 20 arranged to drive the foremost axle 18a), wherein the propulsion force Fx21 is determined based on the obtained relation (from S1) and the received at least one axle load Fz21, Fz22, Fz23 (from S2). In the first example, by using the coupling force sensor 26 to measure the vertical and longitudinal force, the proportion between longitudinal and vertical force Fcx and Fcz can be used to determine the optimal amount of force to propel the semitrailer 10 with, while still operating safely. The formula to calculate the propelling force may here be:

$$\frac{Fcx}{Fcz}Fz_2 = Fx_{21} \quad [1]$$

where $Fcx$ is the longitudinal coupling force, $Fcz$ is the vertical coupling force, $Fz_2$ is the total axle load of the semitrailer 10, and $Fx_{21}$ is the propulsion force (all forces in Newton). This will allow the combination 14 to have the same unit-wise friction utilization without knowing the current propulsion force on the other unit.

The method may further comprise determining S4, by the processing circuitry 30, a torque based on the propulsion force Fx21. The torque may for example be determined by:

$$Fx_{21} \cdot r_{21} = T_{21} \quad [2]$$

where $Fx_{21}$ is the propulsion force, $r_{21}$ is the radius of the wheels of the at least one axle driven by the at least one electrical machine (such as foremost axle 18a driven by electrical machine 20), and $T_{21}$ is the torque. The torque may hence be referred to as a wheel torque.

The method may further comprise providing S5 (by the electronic control unit 28) control parameters 32 based on the determined torque to the at least one electrical machine such as electrical machine 20 arranged to drive the axle 18a. The control parameters 32 may for example include or signify an electrical machine torque value (or motor torque) for the electrical machine 20 to achieve the determined wheel torque $T_{21}$ (taking into account any gear ratio in between). Thus, in the first example, with the axle load sensors 24a-c and the coupling force sensor 26 (but without communication between the tractor 12 and the semitrailer 10), the semitrailer 10 can apply a torque proportional to the relation between longitudinal and vertical coupling forces Fcx and Fcz on the driven semitrailer axle 18a. It should be noted that if the semitrailer 10 has say two electrical machines arranged to drive either two axles or one axle of the semitrailer 10, the determined propulsion force Fx21 may basically be divided by 2 to get the propulsion force/torque for each electrical machine.

The method may further comprise driving S6, by the electrical machine 20, the axle 18a (in accordance) with the determined wheel torque, as a result of step S5.

The method (e.g. steps S1-S5 or steps S1-S6) may repeatedly and/or continuously be performed when the semitrailer 10 is hauled or pulled by the tractor 12, taking into account e.g. the current coupling forces. Moreover, steps S3 and S4 may in practice and within the scope of the present disclosure be performed in one operation, e.g. formulas [1] and [2] may be combined.

In the first example mentioned above, the force Fx21 will scale linearly with the articulation angle between the semitrailer 10 and the tractor 12 as the articulation angle approaches 90 degrees where the force Fx21 reaches zero, and beyond 90 degrees the force Fx21 will become negative. So to avoid the semitrailer 10 starting to reverse at high articulation angles, the torque such as $T_{21}$ used to provide the control parameters 32 may in the first example be limited to zero if the articulation angle is above 90 degrees. That is, if the (current) articulation angle between the semitrailer 10 and the tractor 12 is > 90 degrees, no torque will be applied by the semi-trailer 10. If the articulation angle is under 90 degrees, the electrical machine 20 could be allowed to retard, e.g. for regenerative braking. The current articulation angle between the semitrailer 10 and the tractor 12 may for example be measured by an articulation angle sensor (not shown) on the semitrailer 10 or by an estimation by the difference in wheel speed on the two sides of the semitrailer 10.

In the second example, the coupling force in the yaw plane may instead be a total coupling force in the yaw plane determined by:

$$Fctot = \sqrt{Fcx^2 + Fcy^2} \quad [3]$$

where *Fctot* is the total coupling force in the yaw plane, *Fcx* is a longitudinal coupling force, and *Fcy* is the lateral coupling force. This can be used to remove an enforced linear decrease of force due to articulation angle from the previous formula/equation [1].

Also in the second example, to obtain the coupling force relation in step S2, the electronic control unit 28 may receive the longitudinal, lateral, and vertical coupling forces Fcx, *Fey,* and Fcz (all in Newtons) from the coupling force sensor 26, determine (by the processing circuitry 30) the total coupling force *Fctot* as in equation [3], and determine (by the processing circuitry 30) the relation by dividing the total coupling force *Fctot* by the vertical coupling force Fcz. The propulsion force Fx21 may then be determined by:

$$\frac{Fctot}{Fcz} Fz_2 = Fx_{21} \quad [4]$$

where *Fctot* is the total coupling force in the yaw plane, *Fez* is the vertical coupling force, $Fz_2$ is the total axle load of the semitrailer, and $Fx_{21}$ is the propulsion force.

If the torque should be decreased by some other function, the propulsion force Fz2 may further be determined based on a factor β, which factor β is capable of reducing the torque depending for example on the current articulation angle between the semitrailer 12 and the tractor 10. The factor β can for example be implemented in the following equation (used in step S3):

$$\frac{Fctot}{Fcz} Fz_2 \cdot \beta = Fx_{21} \quad [5]$$

where *Fctot* is the total coupling force in the yaw plane, *Fez* is the vertical coupling force, $Fz_2$ is the total axle load of the semitrailer, $\beta$ is the factor capable of reducing the torque, and $Fx_{21}$ is the propulsion force. The factor β could likewise be included in formula [1].

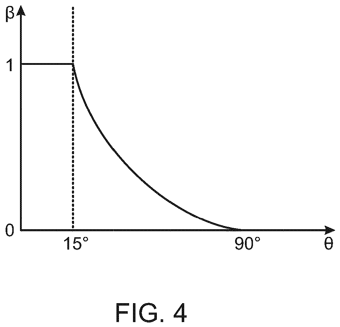

β may be factor a from a function used to calculate the scaling of force Fz2 on the driven axle 18a ranging from 1 to 0. **FIG. 4** is an example where the factor β depends on the articulation angle θ between the between the semitrailer 12 and the tractor 10. The factor β in **FIG. 4** allows full torque utilization up to 15 degrees, then it scales down rapidly. This may result in a safer vehicle combination 14 in turns.

The factor β may also or alternatively depend on one or more other parameters, such as side slip angle of the semitrailer 10, road friction, longitudinal velocity of the semitrailer 10, lateral acceleration of the semitrailer 10, and/or curvature of the road that the semitrailer 10 is travelling on. Specifically, the propulsion force Fx21/torque $T_{21}$ may be reduced or lowered for: higher side slip angle of the semitrailer 10, lower road friction, higher longitudinal velocity of the semitrailer 10, higher lateral acceleration of the semitrailer 10, and/or higher curvature of the road that the semitrailer 10 is travelling on.

The propulsion force Fx21 may be limited by $\mu Fz_{21}$, where $\mu$ is the friction coefficient between the road and the tires of the axle 18a that the electrical machine 20 is arranged to drive, and $Fz_{21}$ is the axle load of the axle 18a. This is due to friction, and $\mu Fz_{21}$ is the maximum force that can be utilized before slipping. Hence, should the propulsion force Fx21 determined by the electronic control unit 28 in step S3 be larger than $\mu Fz_{21}$, the electronic control unit 28 may be configured to "instead" use $\mu Fz_{21}$ when determining the torque in step S4. The friction coefficient $\mu$ may for example be estimated or measured by a sensor on the semitrailer 10.

Instead of using the total axle load Fz2, the at least one axle load used to determine the propulsion force Fx21 in step S3 may be the axle load Fz21 of the one axle 18a driven by the electrical machine 20, as received from the axle load sensor 24a:

$$\frac{Fcx}{Fcz} Fz_{21} = Fx_{21} \quad [6]$$

This will lower the propulsion force Fx21, and it will be saturated by the friction limit of the axle 18a driven by the electrical machine 20 instead of the semitrailer 10. It should be noted that Fz21 may replace Fz2 also in formulas/equations [4] and [5].

It can be noted that formulas used to determine the propulsion force Fx21 in step S3, such as formula [1], are applicable both on level ground as well as in slopes. For example, when driving in an uphill, the total axle load Fz2 will increase as the weight is moved from the vertical coupling force Fcz to the total axle load Fz2 (increasing the propulsion force Fx21), and the longitudinal coupling force Fcx will increase as gravity will push the semitrailer 10 "backwards" when going uphill (which also will increase the propulsion force Fx21). The effect will be the opposite when driving downhill, which will result in a lower propulsion force Fx21 when going downhill.

Referring back to step S 1, the coupling forces could alternatively be estimated without having a coupling force sensor included in the semitrailer 10. Specifically, the coupling forces could be estimated with the following information available: a single-track vehicle model for the combination 14, a tire model for the combination 14, IMU (inertial measurement unit) readings from the tractor 12, IMU readings from the semitrailer 10, articulation angle reading from a sensor, longitudinal forces applied by the electric motors of the combination 14, and steering angle of the tractor 12.

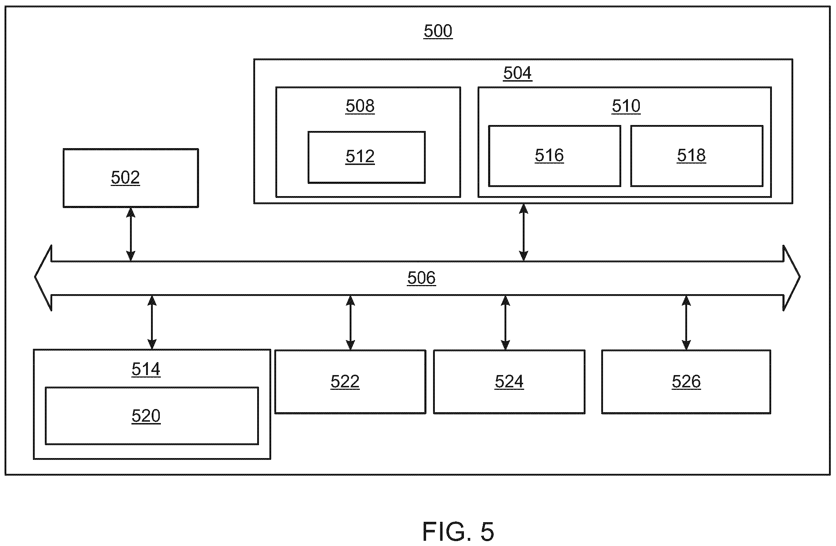

FIG. 5 is a schematic diagram of a computer system 500 for implementing examples disclosed herein, such as the electronic control unit 28. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units) such as processing circuitry 30, a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A method of controlling operation of a semitrailer coupled to a tractor via a fifth wheel coupling, the method comprising: obtaining a relation between a coupling force in a yaw plane and a vertical coupling force in the semitrailer's part of the fifth wheel coupling; receiving, from at least one axle load sensor included in the semitrailer, at least one axle load of the semitrailer; determining, by processing circuitry, a propulsion force to propel the semitrailer with using at least one electrical machine arranged to drive at least one axle of the semitrailer, wherein the propulsion force is determined based on the obtained relation and the received at least one axle load; determining, by the processing circuitry, a torque based on the determined propulsion force; and providing control parameters based on the determined torque to the at least one electrical machine.

Example 2: The method of example 1, wherein determining the propulsion force includes multiplying the obtained relation by the received at least one axle load.

Example 3: The method of any of examples 1-2, wherein said relation is obtained based on measurements by a coupling force sensor included in the semitrailer.

Example 4: The method of any of examples 1-3, wherein the at least one axle load used to determine the propulsion force is a total axle load of the semitrailer.

Example 5: The method of any of examples 1-3, wherein the semitrailer comprises at least one axle not driven by any electrical machine, and wherein the at least one axle load used to determine the propulsion force is the axle load of the at least one axle driven by the at least one electrical machine.

Example 6: The method of any of examples 1-5, wherein the coupling force in a yaw plane is a longitudinal coupling force.

Example 7: The method of examples 4 and 6, wherein the propulsion force is at least partly determined by:

$$\frac{Fcx}{Fcz}Fz_2 = Fx_{21}$$

where $Fcx$ is the longitudinal coupling force, $Fez$ is the vertical coupling force, $Fz_2$ is the total axle load of the semitrailer, and $Fx_{21}$ is the propulsion force.

Example 8: The method of any of examples 6-7, wherein the torque used to provide the control parameters is limited to zero in response to an articulation angle between the semitrailer and the tractor being above 90 degrees.

Example 9: The method of any of examples 1-5, wherein the coupling force in a yaw plane is a total coupling force in the yaw plane determined by:

$$Fctot = \sqrt{Fcx^2 + Fcy^2}$$

where $Fctot$ is the total coupling force in the yaw plane, $Fcx$ is a longitudinal coupling force, and $Fcy$ is a lateral coupling force.

Example 10: The method of any of examples 1-9, wherein the propulsion force further is determined based on a factor capable of reducing the torque depending on one of: articulation angle between the semitrailer and the tractor, side slip angle of the semitrailer, road friction, longitudinal velocity of the semitrailer, lateral acceleration of the semitrailer, and curvature of the road that the semitrailer is travelling on.

Example 11: The method of example 10, wherein the factor ranges from 1 to 0.

Example 12: The method of examples 4 and 9-10, wherein the propulsion force is determined by:

$$\frac{Fctot}{Fcz} Fz_2 \cdot \beta = Fx_{21}$$

where $Fctot$ is the total coupling force in the yaw plane, $Fez$ is the vertical coupling force, $Fz_2$ is the total axle load of the semitrailer, $\beta$ is the factor capable of reducing the torque, and $Fx_{21}$ is the propulsion force.

Example 13: The method of examples 10-12, wherein the factor depends on articulation angle between the semitrailer and the tractor, wherein the factor is 1 up to a predetermined articulation angle, and wherein the factor decreases to 0 beyond the predetermined articulation angle.

Example 14: The method of any of examples 1-13, wherein the propulsion force used to determine the torque is limited by $\mu Fz_{21}$, where $\mu$ is the friction coefficient between the road and the tires of at least one axle that the at least one electrical machine is arranged to drive, and $Fz_{21}$ is the axle load of the at least one axle that the at least one electrical machine is arranged to drive.

Example 15: The method of any of examples 1-14, wherein the torque is determined by:

$$Fctot = \sqrt{Fcx^2 + Fcy^2}$$

where $Fctot$ is the total coupling force in the yaw plane, $Fcx$ is a longitudinal coupling force, and $Fcy$ is a lateral coupling force.

Example 16: The method of any of examples 1-15, further comprising: driving, by the at least one electrical machine, the at least one axle with the determined torque.

Example 17: A computer program product comprising program code for performing, when executed by processing circuitry, the method of any of examples 1-15.

Example 18: A non-transitory computer-readable storage medium comprising instructions, which when executed by processing circuitry, cause the processing circuitry to perform the method of any of examples 1-15.

Example 19: A computer system configured to perform the method of any of examples 1-15.

Example 20: A semitrailer comprising the computer system according to example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method of controlling operation of a semitrailer (10) coupled to a tractor (12) via a fifth wheel coupling (16a-b), the method comprising:

    obtaining (S1) a relation between a coupling force (Fcx) in a yaw plane and a vertical coupling force (Fcz) in the semitrailer's part (16a) of the fifth wheel coupling;
    receiving (S2), from at least one axle load sensor (24a-c) included in the semitrailer (10), at least one axle load (Fz21, Fz22, Fz23) of the semitrailer (10);
    determining (S3), by processing circuitry (30), a propulsion force (Fx21) to propel the semitrailer (10) with using at least one electrical machine (20) arranged to drive at least one axle (18a) of the semitrailer (10), wherein the propulsion force (Fx21) is determined based on the obtained relation and the received at least one axle load (Fz21, Fz22, Fz23);
    determining (S4), by the processing circuitry (30), a torque based on the determined propulsion force (Fx21); and
    providing (S5) control parameters (32) based on the determined torque to the at least one electrical machine (20).

2. The method of claim 1, wherein said relation is obtained based on measurements by a coupling force sensor (26) included in the semitrailer (10).

3. The method of any of claims 1-2, wherein the at least one axle load used to determine the propulsion force is a total axle load (Fz2) of the semitrailer (10).

4. The method of any of claims 1-2, wherein the semitrailer (10) comprises at least one axle (18b-c) not driven by any electrical machine, and wherein the at least one axle load used to determine the propulsion force is the axle load (Fz21) of the at least one axle (18a) driven by the at least one electrical machine (20).

5. The method of any of claims 1-4, wherein the coupling force in a yaw plane is a longitudinal coupling force (Fcx).

6. The method of claims 3 and 5, wherein the propulsion force is at least partly determined by:

$$\frac{Fcx}{Fcz}Fz_2 = Fx_{21}$$

where $Fcx$ is the longitudinal coupling force, $Fez$ is the vertical coupling force, $Fz_2$ is the total axle load of the semitrailer, and $Fx_{21}$ is the propulsion force.

7. The method of any of claims 5-6, wherein the torque used to provide the control parameters (32) is limited to zero in response to an articulation angle between the semitrailer (10) and the tractor (12) being above 90 degrees.

8. The method of any of claims 1-4, wherein the coupling force in a yaw plane is a total coupling force in the yaw plane determined by:

$$Fctot = \sqrt{Fcx^2 + Fcy^2}$$

where $Fctot$ is the total coupling force in the yaw plane, $Fcx$ is a longitudinal coupling force, and $Fcy$ is a lateral coupling force.

9. The method of any of claims 1-8, wherein the propulsion force further is determined based on a factor capable of reducing the torque depending on one of: articulation angle between the semitrailer (10) and the tractor (12), side slip angle of the semitrailer (10), road friction, longitudinal velocity of the semitrailer (10), lateral acceleration of the semitrailer (10), and curvature of the road that the semitrailer (10) is travelling on.

10. The method of claim 9, wherein the factor ($\beta$) depends on articulation angle (0) between the semitrailer (10) and the tractor (12), wherein the factor is 1 up to a predetermined articulation angle, and wherein the factor decreases to 0 beyond the predetermined articulation angle.

11. The method of any of claims 1-10, wherein the propulsion force used to determine the torque is limited by $\mu Fz_{21}$, where $\mu$ is the friction coefficient between the road and the tires of at least one axle (18a) that the at least one electrical machine (20) is arranged to drive, and $Fz_{21}$ is the axle load of the at least one axle (18a) that the at least one electrical machine (20) is arranged to drive.

12. The method of any of claims 1-11, wherein the torque is determined by:

$$Fx_{21} \cdot r_{21} = T_{21}$$

where $Fx_{21}$ is the propulsion force, $r_{21}$ is the radius of the wheels of the at least one axle (18a) driven by the at least one electrical machine (20), and $T_{21}$ is the torque.

13. A computer program product comprising program code for performing, when executed by processing circuitry (30), the method of any of claims 1-12.

14. A computer system (28) configured to perform the method of any of claims 1-12.

15. A semitrailer (10) comprising the computer system (28) according to claim 14.

FIG. 1

FIG. 2

FIG. 3

FIG. 4

FIG. 5

Europäisches
Patentamt
European
Patent Office
Office européen
des brevets

## EUROPEAN SEARCH REPORT

**Application Number**

EP 25 15 1493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/067279 A1 (JAVIDAN ALI [US] ET AL) 29 February 2024 (2024-02-29) * paragraphs [0014], [0021], [0025], [0149], [0151], [0152]; figures 1A,1B,2A,3A,3B,7A,7B,7C * | 1-10, 12-15 | INV. B60D1/01 B60D1/24 B60D1/62 B62D53/08 B62D59/04 |
| | ----- | | |
| X | WO 2023/237176 A1 (VOLVO TRUCK CORP [SE]) 14 December 2023 (2023-12-14) * page 18, line 31 - page 19, line 10 * * page 13, line 25 - line 32 * * page 16, line 30 - page 17, line 3 * * claims 3,4; figures 1,8,9 * | 1-5,7, 9-15 | |
| | ----- | | |
| A | US 10 500 975 B1 (HEALY THOMAS JOSEPH [US]) 10 December 2019 (2019-12-10) * claims; figures * | 1 | |
| | ----- | | |

**TECHNICAL FIELDS SEARCHED (IPC)**

B60D
B62D

The present search report has been drawn up for all claims

| Place of search | Date of completion of the search | Examiner |
|---|---|---|
| The Hague | 11 June 2025 | Schmidt, Rémi |

EPO FORM 1503 03.82 (P04C01)

## ANNEX TO THE EUROPEAN SEARCH REPORT
## ON EUROPEAN PATENT APPLICATION NO.

EP 25 15 1493

This annex lists the patent family members relating to the patent documents cited in  the above-mentioned European search report.
The members are as contained in the European Patent Office EDP file on
The European Patent Office is in no way liable for these particulars which are merely given for the purpose of information.

11-06-2025

| Patent document cited in search report | | Publication date | Patent family member(s) | | Publication date |
|---|---|---|---|---|---|
| US 2024067279 | A1 | 29-02-2024 | EP | 4561890 A1 | 04-06-2025 |
| | | | US | 2024067279 A1 | 29-02-2024 |
| | | | US | 2024068894 A1 | 29-02-2024 |
| | | | US | 2024264019 A1 | 08-08-2024 |
| | | | WO | 2024044386 A1 | 29-02-2024 |
| WO 2023237176 | A1 | 14-12-2023 | CN | 119301027 A | 10-01-2025 |
| | | | EP | 4536523 A1 | 16-04-2025 |
| | | | WO | 2023237176 A1 | 14-12-2023 |
| US 10500975 | B1 | 10-12-2019 | US | 10500975 B1 | 10-12-2019 |
| | | | US | 10906406 B1 | 02-02-2021 |

EPO FORM P0459

For more details about this annex : see Official Journal of the European Patent Office, No. 12/82